(19) **Europäisches Patentamt / European Patent Office / Office européen des brevets**

(11) **EP 2 868 198 B1**

(12) # EUROPEAN PATENT SPECIFICATION

(45) Date of publication and mention of the grant of the patent:
**22.02.2017 Bulletin 2017/08**

(21) Application number: **13813755.9**

(22) Date of filing: **02.07.2013**

(51) Int Cl.:
*A01N 57/32* (2006.01)     *A01N 51/00* (2006.01)
*A01P 5/00* (2006.01)      *A01P 7/02* (2006.01)
*A01P 7/04* (2006.01)

(86) International application number:
**PCT/JP2013/068180**

(87) International publication number:
**WO 2014/007265 (09.01.2014 Gazette 2014/02)**

(54) **PESTICIDAL COMPOSITION COMPRISING FOSTHIAZATE AND CLOTHIANIDIN AND PEST CONTROL METHOD**

SCHÄDLINGSBEKÄMPFUNGSZUSAMMENSETZUNG ENTHALTEND FOSTHIAZAT UND CLOTHIANIDIN UND SCHÄDLINGSBEKÄMPFUNGSVERFAHREN

COMPOSITION PESTICIDE COMPRENANT FOSTHIAZATE ET CLOTHIANIDIN ET PROCÉDÉ DE LUTTE CONTRE LES NUISIBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.07.2012 JP 2012149204**

(43) Date of publication of application:
**06.05.2015 Bulletin 2015/19**

(73) Proprietor: **Ishihara Sangyo Kaisha, Ltd.**
**Osaka-shi, Osaka 550-0002 (JP)**

(72) Inventor: **YOSHIMURA, Hideshi**
**Kusatsu-shi**
**Shiga 525-0025 (JP)**

(74) Representative: **Müller-Boré & Partner**
**Patentanwälte PartG mbB**
**Friedenheimer Brücke 21**
**80639 München (DE)**

(56) References cited:
**WO-A1-2005/070206     CN-A- 102 771 510**
**JP-A- H01 238 505     JP-A- H08 143 408**
**JP-A- 2003 081 987     JP-A- 2005 232 160**
**JP-A- 2008 239 515**

- **DATABASE WPI Week 198944 Thomson Scientific, London, GB; AN 1989-320475 XP002751835, -& JP H01 238505 A (ISHIHARA SANGYO KAISHA LTD) 22 September 1989 (1989-09-22)**
- **DATABASE WPI Week 201057 Thomson Scientific, London, GB; AN 2010-J99949 XP002751836, -& CN 101 755 833 A (SHENZHEN NUOPUXIN AGROCHEMICAL CO LTD) 30 June 2010 (2010-06-30)**
- **DATABASE WPI Week 201181 Thomson Scientific, London, GB; AN 2011-N81870 XP002751837, -& CN 102 204 564 A (CHENGDU KELILONG BIOCHEMICAL CO LTD) 5 October 2011 (2011-10-05)**
- **DATABASE WPI Week 201228 Thomson Scientific, London, GB; AN 2011-Q21407 XP002751838, -& CN 102 246 818 A (SHAANXI MEIBANG PESTICIDE CO LTD) 23 November 2011 (2011-11-23)**
- **DATABASE WPI Week 201028 Thomson Scientific, London, GB; AN 2010-D58662 XP002751839, -& CN 101 669 517 A (SHENZHEN NOPOSION AGROCHEMICAL CO LTD) 17 March 2010 (2010-03-17)**
- **DATABASE WPI Week 199632 Thomson Scientific, London, GB; AN 1996-318804 XP002751840, -& JP H08 143408 A (ISHIHARA SANGYO KAISHA LTD) 4 June 1996 (1996-06-04)**

**EP 2 868 198 B1**

**(Cont. next page)**

- DATABASE WPI Week 201310 Thomson Scientific, London, GB; AN 2013-A78639 XP002751843, -& CN 102 696 673 A (BEIJING MINGDE LIDA AGRIC TECHNOLOGY CO) 3 October 2012 (2012-10-03)
- DATABASE WPI Week 201316 Thomson Scientific, London, GB; AN 2013-C33929 XP002751841, -& CN 102 771 510 A (SHAANXI SUNGER ROAD BIO SCI CO LTD) 14 November 2012 (2012-11-14)
- DATABASE WPI Week 201545 Thomson Scientific, London, GB; AN 2015-32016R XP002751842, & CN 104 472 533 A (GUANGDONG ZHONGXUN AGRIC SCI CO LTD) 1 April 2015 (2015-04-01)

**Description**

The present invention relates to a pesticidal composition comprising as active ingredients the organic phosphorus compound (A) fosthiazate and the compound (B) clothianidin, and a method for controlling pests using the pesticidal composition.

An insecticidal/nematicidal composition comprising as active ingredients at least one organic phosphorus nematicide selected from the group consisting of fosthiazate, imicyafos and cadusafos and a specific organic phosphorus insecticide is disclosed in Patent Document 1.

Further, a pesticide comprising as active ingredients an organic phosphorus compound represented by a specific chemical structural formula, and at least one member of an organic phosphorus compound, a carbamate compound, a pyrethroid compound, an urea compound, a sulfone compound and a N-pyridylaniline compound is disclosed in Patent Document 2.

Further, an agricultural and horticultural insecticidal composition comprising as active ingredients fosthiazate, and a neonicotinoid compound such as imidacloprid, nitenpyram and acetamiprid, having increased activity of controlling both nematodes and pests on the above-ground part simultaneously is disclosed in Patent Document 3.

Patent Document 1: JP-A-2007-269787
Patent Document 2: JP-A-1-238505
Patent Document 3: JP-A-8-143408

Moeover, CN 101755833 A describes an insecticidal composition comprising tefluthrin (A) and compound (B) including abamectin or fosthiazate. WO 2005/070206 A1 describes a pest control composition and a method of controlling pest.

At present, many pesticidal compositions have been developed and used, but they are not necessarily sufficient for controlling pests in some cases, and a high active pesticidal composition has been desired. Particularly, a high active pesticidal composition which can control pests living in soil and pests living in the above-ground part simultaneously has been desired.

The object of the present invention is to provide a pesticidal composition having a broad pesticidal spectrum, having high activity and having a long lasting effect, and a comprehensively labor-saving controlling method using the pesticidal composition.

The present inventor has conducted extensive studies and as a result, found that a high active pesticidal composition can be obtained by a combination of specific compounds, and accomplished the present invention.

That is, the present invention relates to a pesticidal composition comprising as active ingredients the organic phosphorus compound (A) fosthiazate (common name) (hereinafter referred to as compound A) and the compound (B) clothianidin (common name) (hereinafter referred to as compound B).

The present invention further relates to a method for controlling pests, which comprises applying a pesticidally effective amount of the composition.

The pesticidal composition of the present invention has a synergistic effect in controlling pests, has a high controlling activity, a long lasting effect and a rapid-acting effect as compared with a case where the respective compounds are applied individually, and is effective e.g. for controlling pests.

Fosthiazate has optical isomers, and both of optical isomers and a racemic form are included in compound A of the present invention.

Clothianidin is a neonicotinoid compound.

The mixing ratio of compound A to compound B cannot generally be defined, as it varies depending upon various conditions such as the type of the formulation, the application method, the weather conditions, and the type and the situation of emergence of pests to be controlled. For example, it is from 1:0.01 to 1:20, preferably from 1:0.04 to 1:10 by the weight ratio. For the combination fosthiazate and clothianidin, the mixing ratio is preferably from 1:0.01 to 1:10, more preferably from 1:0.02 to 1:7 by the weight ratio.

The pesticidal composition of the present invention may be applied at an active ingredient concentration of, for example, from 10 to 10,000 ppm, preferably from 100 to 5,000 ppm. The active ingredient concentration may properly be adjusted depending upon the mixing ratio of compound A to compound B, the type of the formulation, the application method, the weather conditions, and the type and the situation of emergence of pests to be controlled.

The amounts of application (pesticidally effective amounts) of compound A and compound B per unit area cannot generally be defined in the same manner as described above, and for example, the amount of compound A is from 500 to 10,000 g/ha, preferably from 750 to 5,000 g/ha, and the amount of compound B is from 100 to 10,000 g/ha, preferably from 200 to 5,000 g/ha.

When the pesticidal composition of the present invention is applied, either of application to pests and application to a place where they live may be selected. Further, soil application may also be selected. Further, the pesticidal composition of the present invention may take various application forms such as soil incorporation, planting hole application, in-furrow application and drenching.

Further, it may also take various application forms such as impregnation, coating and powdering on seeds or bulbs of crop plants. Further, in the present invention, compound A and compound B in pesticidally effective amounts may be applied in accordance with the above application forms and on that occasion, compound A and compound B may be applied simultaneously, or either one may be applied and then the other is applied.

The pesticidal composition of the present invention can control various pests such as nematodes, isopods, coleopteran insects, lepidopteran insects, gastropods, orthopteran insects, plant-parasitic mites, thrips, dipteran insects, hymenopteran insects, Siphonaptera, anopluran insects, isoptera insects, hemipteran insects, sow bugs, centipedes and millipedes.

The pesticidal composition of the present invention is particularly effective for controlling pests which damage agricultural and horticultural crop plants, trees, etc. in soil, and pests which damage seeds of agricultural and horticultural crop plants and trees, such as nematodes, isopods, coleopteran insects, lepidopteran insects, gastropods, orthopteran insects, plant-parasitic mites and hemipteran insects.

Further, by applying the pesticidal composition of the present invention to soil, it is possible to control pests living in the soil and pests living in the above-ground part simultaneously. Further, by such a method, the doses of the active ingredients and the number of application are reduced, and a long lasting effect is obtained, and thus a comprehensively labor-saving controlling method can be provided.

Specific examples of pests are shown below.

The nematodes may, for example, be root-lesion nematode such as Pratylenchus coffeae, Pratylenchus fallax, Pratylenchus loosi and Pratylenchus vulnus; cyst nematode such as soybean cyst nematode (Heterodera glycines) and potato cyst nematode (Globodera rostochiensis); root-knot nematode such as Meloidogyne hapla and southern root-knot nematode (Meloidogyne incognita); Aphelenchoides such as rice white-tip nematode (Aphelenchoides besseyi) and Aphelenchoides fragarieae; Tylenchorhynchus; Criconematidae; Pratylenchus; Longidoridae; Trichodorus; strawberry bud nematode (Ditylenchus acris) and pine wood nematode (Bursaphelenchus xylophilus).

The isopods may, for example, be wood louses (Armadillidium vulgare) and sow bugs Porcellio scaber).

The coleopteran insects may, for example, be corn rootworms such as Western corn rootworm (Diabrotica virgifera virgifera) and Southern corn rootworm (Diabrotica undecimpunctata howardi); scarab beetles such as Anomala cuprea and Anomala rufocuprea; weevils such as Sitophiluszeamais, Echinocnemus squamous, Cylas formicarius, Lissorhoptrus oryzophilus, Hypera pastica, and Callosobruchuys chienensis; hairworms such as Melanotus okinawensis, Agriotes ogurae fusciollis and Melanotus legatus; mealworms such as Tenebrio molitor and Tribolium castaneum; leaf bettles such as Aulacophora femoralis, Phyllotreta striolata and Leptinotarsa decemlineata; Epilachna such as Epilachna vigintioctopunctata; Bostrychidae; and Paederus fuscipes.

The lepidopteran insects may, for example, be Pyralidae such as Chilo suppressalis, Cnaphalocrocis medinalis, Ostrinia nubilalis, Parapediasia teterrella, Notarcha derogate and Plodia interpunctella; owlet moths such as Spodoptera litura, Pseudaletia separate, Mamestra brassicae, Agrotis ipsilon, Trichoplusia, Heliothis and Helicoverpa; Pieridae such as Pieris rapae; Tortricidae such as Adoxophyes, Grapholita molesta and Cydia pomonella; Carposinidae such as Carposina niponensis; Lyonetiidae such as Lyonetia; Lymantriidae such as Lymantria and Euproctis; Yponomeutidae such as Plutellaxylostella; Gelechiidae such as pink bollworm (Pectinophora gossypiella); Arctiidae such as fall webworm (Hyphantria cunea); and Tineidae such as casemaking clothes moth (Tinea translucens) and Tineola bisselliella.

The gastropods may, for example, be snails and slugs.

The orthopteran insects may, for example, be mole crichet (Gryllotalpa africana), Asiatic locust Locusta migratoria migratoriodes), German cock roach (Blattella germanica), Periplaneta fuliginosa, American cockroach (Periplaneta americana), Periplaneta brunnea and Blatta orientalis.

The plant-parasitic mites may, for example, be two-spotted spider mite (Tetranychus urticae), carmine spider mite (Tetranychus cinnabarinus), citrus red mite (Panonychus citri) and bulb mite (Rhizoglyphus echinopus).

The thrips may, for example, be thrips (Thrips palmi), Thrips tabaci, Thrips hawaiiensis, yellow tea thrips (Scirtothrips dorsalis), Frankliniella intonsa, western flower thrips (Frankliniella occidentalis) and Ponticulothrips diospyrosi.

The dipteran insects may, for example, be Culex such as Culex pipiens pallens and Culex tritaeniorhynchus; Aedes such as Aedes aegypti and Aedes albopictus; Anopheles such as Anopheles sinensis; Chironomus; Musca such as muscid fly (Musca domestica and Muscina stabulans); Calliphoridae; Sarcophagidae; Fannia; Anthomyia such as Deliaplatura and Delia antiqua; Agromyzidae such as legume leafminer (Liriomyza trifolii); Tephitidae; Drosophila; Psychodidae; Simuliidae; Tabanus; and stomoxiid flies (Stomoxys sp.)

The hymenopteran insects may, for example, be ants; Polistinae; hornets (Vespa sp.); Bethylidae; Tenthredinidae such as Athalia rosae; and Argidae such as Arge pagana.

The Siphonaptera may, for example, be Ctenocephalides felis, Ctenocephalides canis and Pulex irritans.

The anopluran insects may, for example, be Pediculus humanus corporis, Phthirus pubis and human louse (Pediculus humanus humanus).

The isoptera insects may, for example, be termites (<u>Reticulitermes</u> <u>speratus</u>) and formosan subterranean termite (<u>Coptotermes</u> <u>formosanus</u>).

The hemipteran insects may, for example, be Delphacidae such as small brown planthopper (<u>Laodelphax</u> <u>striatellus</u>), brown rice planthopper (<u>Nilaparvata</u> <u>lugens</u>) and whitebacked planthopper (<u>Sogatella</u> <u>furcifera</u>); Deltcephalidae such as green rice leafhopper (<u>Nephotettix</u> <u>cincticeps</u>) and <u>Nephotettix</u> <u>virescens</u>; aphids such as cotton aphid (<u>Aphis</u> <u>gossypii</u>), green peach aphid (<u>Myzus</u> <u>persicae</u>), <u>Aphis</u> <u>citricola</u>, turnip aphid (<u>Lipaphis</u> <u>psedobrassicas</u>), <u>Nippolachnus</u> <u>piri</u>, <u>Toxoptera</u> <u>aurantii</u> and <u>Toxoptera</u> <u>ciidius</u>; bugs (Heteroptera) such as <u>Nezara</u> <u>antennata</u>, <u>Cletus</u> <u>punctiger</u>, bean bug (<u>Riptortus</u> <u>clavatus</u>) and <u>Plautia</u> <u>stali</u>; whiteflies such as greenhouse whitefly (<u>Trialeurodes</u> <u>vaporariorum</u>), sweetpotato whitefly (<u>Bemisia</u> <u>tabaci</u>) and silverleaf whitefly (<u>Bemisia</u> <u>argentifolii</u>); scale insects such as <u>Aonidiella</u> <u>aurantii</u>, San Jose scale (<u>Comstockaspis</u> <u>perniciosa</u>), citrus snow scale (<u>Unaspis</u> <u>citri</u>), <u>Pseudaulacaspis pentagona</u>, <u>Saissetia</u> <u>oleae</u>, <u>Lepidosaphes</u> <u>beckii</u>, <u>Ceroplastes</u> <u>rubens</u> and <u>Icerya purchase</u>; Tingitidae; and Psyllidae.

The sow bugs may, for example, be <u>Porcellio</u> <u>scaber</u>, <u>Porcellionides</u> <u>pruinosus</u> and <u>Armadillidium</u> <u>vulgare</u>.

The centipedes may, for example, be <u>Scolopendra</u> <u>subspinipes</u> <u>mutilans</u>, <u>Scolopendra</u> <u>subspinipes</u> <u>japonica</u>, <u>Scolopendra</u> <u>subspinipes</u> <u>multidens</u> and <u>Thereuopoda</u> <u>hilgendorfi</u>.

The millipedes may, for example, be <u>Oxidus</u> <u>gracilis</u> and <u>Parafontarialaminata laminate.</u>

The pesticidal composition of the present invention may be mixed with or may be used in combination with other agricultural chemicals such as insecticides, miticides, nematicides, fungicides, antivirus agents, attractants, herbicides, plant growth regulating agents, etc., whereby more excellent effects may sometimes be obtained. For example, the application range, the application time, the pesticidal activities, etc. may be improved to preferred directions.

The pesticidal composition of the present invention may be prepared by mixing compound A and compound B as active ingredients with various additives in accordance with conventional formulation methods for agricultural chemicals, and applied in various formulations such as dusts, microgranules F, microgranules, granules, water dispersible granules, wettable powders, tablets, pills, capsules (including a formulation packaged by a water soluble film), microcapsules, water-based suspensions, oil-based suspensions, microemulsions, suspoemulsions, water soluble powders, emulsifiable concentrates, soluble concentrates, pastes or aerosols. That is, it may be formulated into any formulation which is commonly used in this field, so long as the object of the present invention is thereby met.

Further, among the above soil applications, the soil incorporation, planting hole application and the in-furrow application are carried out preferably in formulations of dusts, microgranules F, microgranules, granules, tablets or pills.

Further, drenching is carried out preferably in formulations of water dispersible granules, wettable powders, microcapsules, water-based suspensions, oil-based suspensions, water soluble powders or soluble concentrates.

At the time of the formulation, compound A and compound B may be mixed together for the formulation, or they may be separately formulated.

The additives to be used for the formulation include, for example, a solid carrier such as kaolinite, sericite, diatomaceous earth, slaked lime, calcium carbonate, talc, white carbon, kaoline, bentonite, clay, sodium carbonate, sodium bicarbonate, mirabilite, zeolite, alumina, sulfur dust, starch, activated carbon, soybean flour, wheat flour, wood flour, fish meal or milk powder; a solvent such as water, toluene, xylene, trimethylbenzene, tetramethylbenzene, cyclohexane, solvent naphtha, acetone, methyl ethyl ketone, dioxane, tetrahydrofuran, kerosene, fuel oil, chloroform, chlorobenzene, ethyl acetate, a fatty acid glycerin ester, acetonitrile, dimethylsulfoxide, N,N-dimethylformamide, dimethylacetamide, N-methyl-2-pyrrolidone, an alcohol or ethylene glycol; an anionic surfactant such as a salt of fatty acid, a benzoate, a polycarboxylate, a salt of alkylsulfuric acid ester, an alkyl sulfate, an alkylaryl sulfate, an alkyl diglycol ether sulfate, a salt of alcohol sulfuric acid ester, an alkyl sulfonate, an alkylaryl sulfonate, an aryl sulfonate, a lignin sulfonate, an alkyldiphenylether disulfonate, a polystyrene sulfonate, a salt of alkylphosphoric acid ester, an alkylaryl phosphate, a styrylaryl phosphate, a salt of polyoxyethylene alkyl ether sulfuric acid ester, a polyoxyethylene alkylaryl ether sulfate, a salt of polyoxyethylene alkylaryl ether sulfuric acid ester, a polyoxyethylene alkyl ether phosphate, a salt of polyoxyethylene alkylaryl phosphoric acid ester, a salt of polyoxyethylene aryl ether phosphoric acid ester, a naphthalene sulfonic acid condensed with formaldehyde or a salt of alkylnaphthalene sulfonic acid condensed with formaldehyde; a nonionic surfactant such as a sorbitan fatty acid ester, a glycerin fatty acid ester, a fatty acid polyglyceride, a fatty acid alcohol polyglycol ether, acetylene glycol, acetylene alcohol, an oxyalkylene block polymer, a polyoxyethylene alkyl ether, a polyoxyethylene alkylaryl ether, a polyoxyethylene styrylaryl ether, a polyoxyethylene glycol alkyl ether, polyethylene glycol, a polyoxyethylene fatty acid ester, a polyoxyethylene sorbitan fatty acid ester, a polyoxyethylene glycerin fatty acid ester, a polyoxyethylene hydrogenated castor oil or a polyoxypropylene fatty acid ester; and a vegetable oil or mineral oil such as olive oil, kapok oil, castor oil, palm oil, camellia oil, coconut oil, sesame oil, corn oil, rice bran oil, peanut oil, cottonseed oil, soybean oil, rapeseed oil, linseed oil, tung oil or liquid paraffins. These additives may suitably be selected for use alone or in combination as a mixture of two or more of them, so long as the object of the present invention is met.

Further, additives other than the above-mentioned may be suitably selected for use among those known in this field. For example, various additives commonly used, such as a filler, a thickener, an anti-settling agent, an anti-freezing agent, a dispersion stabilizer, a safener, an anti-mold agent, a bubble agent, a disintegrator and a binder, may be used.

The mix ratio by weight of the active ingredients to such various additives in the pesticidal composition of the present invention may be from 0.001:99.999 to 95:5, preferably from about 0.005:99.995 to about 90:10.

As a method of applying the pesticidal composition of the present invention, a proper method can be employed among various methods depending upon various conditions such as the application site, the type of the formulation, and the type and the situation of emergence of pests to be controlled, and for example, the following methods may be mentioned.

1. Compound A and compound B are formulated together, and the formulation is applied as it is.

2. Compound A and compound B are formulated together, and the formulation is diluted to a predetermined concentration with e.g. water, and as the case requires, mixed with a spreader (such as a surfactant, a vegetable oil, a mineral oil) and applied.

3. Compound A and compound B are separately formulated, and the formulations are applied as they are.

4. Compound A and compound B are separately formulated, and as the case requires, the formulations are diluted to predetermined concentrations with e.g. water, and as the case requires, mixed with a spreader (such as a surfactant, a vegetable oil or a mineral oil) and applied.

5. Compound A and compound B are separately formulated, and the formulations are mixed when diluted to predetermined concentrations with e.g. water, and as the case requires, mixed with a spreader (such as a surfactant, a vegetable oil or a mineral oil) and applied.

The pesticidal composition and the method for controlling pests of the present invention have synergistic pesticidal activity. This synergistic activity is based on a synergistic effect unexpected from pesticidal activities of the respective compounds, and according to the present invention, the pesticidal effect particularly the soil pesticidal effect is clearly enhanced, and a rapid-acting effect may sometimes be imparted, as compared with a case where the respective active ingredients are applied individually. When the pesticidal activity in a case where two active ingredients are combined, is larger than the pesticidal activity expected from the respective pesticidal activities of the two active ingredients, it is called a synergistic effect. The activity expected by the combination of two active ingredients can be calculated based on the Colby's formula (Colby S.R., "Weed", vol. 15, p. 20-22, 1967).

Preferred embodiments of the present invention will be described below, but the present invention is by no means restricted thereto.

(1) A pesticidal composition comprising as active ingredients the organic phosphorus compound (A) fosthiazate and the compound (B) clothianidin.

(2) A non-therapeutic method for controlling pests, which comprises applying a pesticidally effective amount of the organic phosphorus compound (A) fosthiazate and a pesticidally effective amount of the compound (B) clothianidin.

(3) The method according to (2), which comprises applying a pesticidally effective amount of the organic phosphorus compound (A) and a pesticidally effective amount of the compound (B) to the pests or to a place where they live to control the pests.

(4) The method according to (2) or (3), wherein a pesticidally effective amount of the organic phosphorus compound (A) and a pesticidally effective amount of the compound (B) are applied to soil, to control the pests.

(5) The method according to (4), wherein compounds are applied to the soil by soil incorporation, planting hole application, in-furrow application or drenching to control the pests.

(6) The method according to (4), wherein the compounds are applied to the soil by soil incorporation to control the pests.

(7) The method according to (2), wherein a pesticidally effective amount of the organic phosphorus compound (A) and a pesticidally effective amount of the compound (B) are applied by soil incorporation to control pests living in the soil, and after seeding or settling of crop plants, the organic phosphorus compound (A) and the compound (B) are further incorporated in the crop plants to control pests living in the above-ground part of the crop plants.

(8) The method according to any one of (2) to (4), wherein a pesticidally effective amount of the organic phosphorus compound (A) and a pesticidally effective amount of the compound (B) are applied to seeds or bulbs of crop plants by impregnation, coating or powdering so as to be applied to soil thereby to control the pests.

(9) The method according to any one of (2) to (8), wherein the pests are at least one member selected from the group consisting of nematodes, isopods, coleopteran insects, lepidopteran insects, gastropods, orthopteran insects, plant-parasitic mites, thrips, dipteran insects, hymenopteran insects, Siphonaptera, anopluran insects, isoptera insects, hemipteran insects, sow bugs, centipedes and millipedes.

(10) The method according to (9), wherein the pests are at least one member selected from the group consisting of nematodes, isopods, coleopteran insects, lepidopteran insects, gastropods, orthopteran insects, plant-parasitic mites and hemipteran insects.

(11) The method according to (10), wherein the pests are at least one member selected from the group consisting of nematodes, coleopteran insects, lepidopteran insects and plant-parasitic mites.

(12) The method according to any one of (2) to (11), wherein pests living in soil and pests living on the above-ground part are controlled by a single application.

EXAMPLES

Now, the present invention will be described in further detail with reference to Examples. However, it should be understood that the present invention is by no means restricted to such specific Examples.

TEST EXAMPLE 1

1 Liter of sand soil having paddy soil sterilized by steam and sand mixed in a volume ratio of 1:1 was put into a 1/1,000,000 ha pot, and a predetermined amount of a test compound was added and mixed. Immediately after addition of the compound, 500 mL of soil contaminated with southern root-knot nematode (Meloidogyne incognita) was put in each pot and sufficiently mixed, and then seedling of tomato (cultivar: yellow pear) were transplantated. On the 33rd to 35th day after transplantation, the root knot index (0 to 100%) formed by nematode was visually determined. The test was carried out by two replications.

As test results, the root knot indices based on the root knot index in the non-treated area being 100 are shown in Table 1. Further, theoretical values determined by the Colby's formula are shown in brackets () in the Table.

TABLE 1

| Test compound (g a.i./ha) | Root knot index |
|---|---|
| fosthiazate(750) | 35.4 |
| clothianidin(5000) | 99.3 |
| fosthiazate(750)+ clothianidin(5000) | 19.5 (35.2) |
| Non-treated | 100 |

1 Liter of sand soil having paddy soil sterilized by steam and sand mixed in a volume ratio of 1:1 was put into a 1/1,000,000 ha pot, and a predetermined amount of a test compound was added and mixed. Seedlings of eggplant (cultivar: Senryo No. 2) in which 30 adults of two-spotted spider mite (greenish yellow) were parasitic were transplanted and grown in a greenhouse for 5 days, and a test compound was applied to each pot. On the 14th day after treatment, the number of two-spotted spider mite parasitic in each pot was examined. The test was carried out by three replications. The test results are shown in Table 4 by the control value (%). Further, theoretical values determined by the Colby's formula are shown in brackets () in Table 4.

Further, the control value (%) was calculated in accordance with the following formula.

$$\text{Control value (\%)} = (1 - (\text{number of parasites in treated area}) / (\text{number of parasites in non-treated area})) \times 100$$

TABLE 4

| Test compound (g a.i/ha) | | Clothianidin | | | |
|---|---|---|---|---|---|
| | | 0 | 400 | 800 | 1500 |
| Fosthiazate | 6000 | 98 | 100 (99) | 100 (99) | 100 (98) |
| | 0 | - | 35 | 48 | 22 |

TEST EXAMPLE 3

Sand soil having sand, non-sterilized soil and sterilized soil mixed in a volume ratio of 1:1:1 was put into a 1/500,000 ha pot, and predetermined amounts of test compounds were sufficiently mixed. Seedlings of cabbage (cultivar: Okina) in 3-leaf stage were transplanted and grown in a greenhouse for 11 days. Then, the fourth leaf of the cabbage was cut, and 10 second-instar larvae of common cutworm were released. On the 4th day, the number of surviving insects was examined, and the control value was determined in the same manner as in Test Example 2. The test was carried out by three replications. The test results are shown in Table 5 by the control value. Further, theoretical values determined by the Colby's formula are shown in brackets () in Table 5. Further, the combination of fosthiazate and imidacloprid was tested as a Comparative Example.

TABLE 5

| Test compound (g a.i/ha) | | Fosthiazate | |
|---|---|---|---|
| | | 6000 | 0 |
| Clothianidin | 313 | 96.7(78.7) | 20.0 |
| | 156 | 83.3(74.2) | 3.3 |
| Imidacloprid (Comparative Example) | 313 | 73.3(76.9) | 13.3 |
| | 156 | 50.0(75.1) | 6.7 |
| | 0 | 73.3 | 0 |

TEST EXAMPLE 4

Granules of fosthiazate and granules of clothianidin were mixed in predetermined active ingredient amounts, and the mixture was spread on the surface of soil of a field and sufficiently mixed by a small rotary. Seeds of Daikon radish were sown, and on the 36th day after sowing, the degree of damage to the root by larvae of turnip fly was examined by degree, and the damage grade was determined in accordance with the following formula. The test results are shown in Table 6 by the damage degree. Further, theoretical values determined by the Colby's formula are shown in brackets () in Table 6. Further, the combination of granules of fosthiazate and granules of imidacloprid was tested as a Comparative Example.
Degree of damage (nil: 0, low: 1, middle: 2, high: 3, enormous: 4)

$$\text{Damage grade} = \{\Sigma \, (\text{damage grade index} \times \text{number of Daikon radish investigated}$$
$$\text{at each degree of damage}) \, / \, (\text{total number investigated} \times 4)\} \times 100$$

TABLE 6

| Test compound (g a.i/ha) | | Fosthiazate | |
|---|---|---|---|
| | | 6000 | 0 |
| Clothianidin | 1000 | 60.0(33.7) | 0 |
| | 750 | 66.3(50.4) | 25.3 |
| | 500 | 54.7(46.9) | 20.0 |
| Imidacloprid (Comparative Example) | 1000 | 51.6(51.1) | 26.3 |
| | 750 | 34.7(56.7) | 34.7 |
| | 500 | 31.6(49.0) | 23.2 |
| | 0 | 33.7 | 0 |

According to the present invention, it is possible to provide a pesticidal composition having a broad pesticidal spectrum, having high activity at reduced doses of active ingredients, and having a long lasting effect.
The control method using the pesticidal composition of the present invention is useful in agricultural and horticultural fields in that pests living in soil and pests living in the above-ground part can be controlled by a single application.

**Claims**

1. A pesticidal composition comprising as active ingredients the organic phosphorus compound (A) fosthiazate and the compound (B) clothianidin.

2. A non-therapeutic method for controlling pests, which comprises applying a pesticidally effective amount of the organic phosphorus compound (A) fosthiazate and a pesticidally effective amount of the compound (B) clothianidin.

3. The method according to Claim 2, which comprises applying a pesticidally effective amount of the organic phosphorus compound (A) and a pesticidally effective amount of the compound (B) to the pests or to a place where they live.

4. The method according to Claim 2, wherein a pesticidally effective amount of the organic phosphorus compound (A) and a pesticidally effective amount of the compound (B) are applied to soil.


**Patentansprüche**

1. Pestizidzusammensetzung, umfassend als aktive Bestandteile die organische Phosphorverbindung (A) Fosthiazat und die Verbindung (B) Clothianidin.

2. Nicht-therapeutisches Verfahren zum Kontrollieren von Schädlingen, welches das Aufbringen einer pestizid-wirksamen Menge der organischen Phosphorverbindung (A) Fosthiazat und einer pestizid-wirksamen Menge der Verbindung (B) Clothianidin umfaßt.

3. Verfahren gemäß Anspruch 2, welches das Aufbringen einer pestizid-wirksamen Menge der organischen Phosphorverbindung (A) und einer pestizid-wirksamen Menge der Verbindung (B) auf die Schädlinge oder auf eine Stelle, wo diese leben, umfaßt.

4. Verfahren gemäß Anspruch 2, wobei eine pestizid-wirksame Menge der organischen Phosphorverbindung (A) und eine pestizid-wirksame Verbindung der Verbindung (B) auf den Erdboden aufgebracht werden.


**Revendications**

1. Composition pesticide comprenant en tant qu'ingrédients actifs le composé de phosphore organique (A), le fosthiazate, et le composé (B), la clothianidine.

2. Procédé non thérapeutique de lutte contre les nuisibles, qui comprend l'application d'une quantité efficace sur le plan pesticide du composé de phosphore organique (A), le fosthiazate, et d'une quantité efficace sur le plan pesticide du composé (B), la clothianidine.

3. Procédé selon la revendication 2, qui comprend l'application d'une quantité efficace sur le plan pesticide du composé de phosphore organique (A) et d'une quantité efficace sur le plan pesticide du composé (B) sur les nuisibles ou sur un lieu où ils vivent.

4. Procédé selon la revendication 2, dans lequel une quantité efficace sur le plan pesticide du composé de phosphore organique (A) et une quantité efficace sur le plan pesticide du composé (B) sont appliquées sur la terre.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007269787 A
- JP 1238505 A
- JP 8143408 A
- CN 101755833 A
- WO 2005070206 A1

**Non-patent literature cited in the description**

- **COLBY S.R.** *Weed,* 1967, vol. 15, 20-22